Europäisches Patentamt

European Patent Office

Office européen des brevets

(11) Veröffentlichungsnummer: **0 066 818**
**B1**

(12) **EUROPÄISCHE PATENTSCHRIFT**

(45) Veröffentlichungstag der Patentschrift :
28.08.85

(51) Int. Cl.⁴ : **B 23 Q    1/02**

(21) Anmeldenummer : **82104749.5**

(22) Anmeldetag : **29.05.82**

(54) **Plattenschneideinrichtung für eine Tischkreissäge.**

(30) Priorität : **05.06.81 DEU 8116734**

(43) Veröffentlichungstag der Anmeldung :
**15.12.82 Patentblatt 82/50**

(45) Bekanntmachung des Hinweises auf die Patenterteilung : **28.08.85 Patentblatt 85/35**

(84) Benannte Vertragsstaaten :
**AT BE CH DE FR GB IT LI SE**

(56) Entgegenhaltungen :
DE-A- 2 354 500
DE-A- 2 948 453
FR-A- 2 418 694
US-A- 2 699 180
US-A- 2 722 243
US-A- 3 008 500
US-A- 3 113 533
US-A- 4 068 551
US-A- 4 106 381

(73) Patentinhaber : **Josef Scheppach Maschinenfabrik
GmbH & Co.
Günzburger Strasse 69
D-8873 Ichenhausen (DE)**

(72) Erfinder : **Scheppach, Fritz
Dr.-Beer-Strasse 5
D-8873 Ichenhausen (DE)**
Erfinder : **Windrich, Wolfgang
Maienweg 20
D-8871 Ettenbeuren-Kammeltal (DE)**

(74) Vertreter : **Munk, Ludwig, Dipl.-Ing.
Prinzregentenstrasse 1
D-8900 Augsburg (DE)**

## Beschreibung

Die Erfindung betrifft eine Plattenschneideinrichtung für eine Tischkreissäge, insbesondere für Heimwerker und/oder Baueinsatz, die eine Plattenauflage und einen Plattenlängsanschlag aufweist und mit zum Kreissägentisch fluchtender Plattenauflage auf der Längsanschlagseite der Kreissäge an diese anbaubar ist und die mit einem zumindest den Plattenlängsanschlag enthaltenden Schlitten versehen ist, der lotrecht zum Plattenlängsanschlag verstellbar auf einem im Bereich der Randkante des Kreissägentisches befestigten Schlittenträger aufgenommen ist.

Eine Anordnung dieser Art ist aus der DE-U-77 06 347 bekannt. Bei dieser bekannten Anordnung ist die Plattenschneideinrichtung als starres Anbauteil ausgebildet. Dieses starre Anbauteil kragt dabei nicht nur in der Betriebsstellung, sondern auch in der Ruhestellung weit über den Kreissägentisch aus und führt somit zu einer sperrigen Gesamtanordnung mit einem hohen Platzbedarf, was sowohl den Transport, als auch die Lagerhaltung als auch die tatsächliche Verwendung mit hohen Platzkosten belasten kann. Die Sperrigkeit der Gesamtanordnung ist im vorliegenden Fall besonders nachteilig, weil es sich bei der erfindungsgemäßen Plattenschneideinrichtung um ein Zusatzgerät zu einer Tischkreissäge handelt, das in der Regel nur sporadisch benutzt wird.

Die US-A-4 068 551 zeigt eine sogenannte Kapp-Kreissäge mit einem von einem das Sägenaggregat aufnehmenden Führungsarm übergriffenen, länglichen Sägentisch, dem eine seitliche Verlängerung zugeordnet ist, die am Sägentisch schwenkbar gelagert und von einer hochgeschwenkten Betriebsstellung, in welcher ihre Auflagefläche mit der Auflagefläche des Sägentisches fluchtet, um etwa 90° in eine platzsparende Ruhestellung abklappbar ist, in welcher sie sich seitlich an das Kreissägengestell anlegt. Zur Fixierung der Sägentischverlängerung in der hochgeschwenkten Betriebsstellung ist hierbei ein am freien Ende der Sägentischverlängerung angeordneter Klappfuß vorgesehen, mittels dessen die Sägentischverlängerung bodenseitig abgestützt ist und der vor dem Abklappen der Sägentischverlängerung in die Ruhestellung so umgelegt wird, daß er an der Unterseite der Sägentischverlängerung anliegt. Nachteilig hierbei ist, daß die Länge des Klappfußes bei jedem Stellungswechsel von neuem den Gegebenheiten des Aufstellungsorts angepaßt werden muß. Hierzu ist der Klappfuß mit bodenseitig ausfahrbaren Schenkeln versehen. Da die Länge dieses Klappfußes hier auch größer als die Länge der Tischverlängerung ist, deren Länge zur Gewährleistung einer einfachen Klappbarkeit zweckmäßig etwas geringer als der Bodenabstand der Auflagefläche des Sägentisches ist, muß der Klappfuß auch bei jedem Abklappvorgang durch Betätigung seiner bodenseitig ein-und ausfahrbaren Schenkel verkürzt werden, was dazu führt, daß der Kl appfuß bei jedem Verbringen der Sägentischverlängerung in die Betriebsstellung von neuem justiert werden muß. Die Anordnung gemäß US-A-4 068 551 erweist sich demnach als nicht einfach und bedienungsfreundlich genug.

Die US-A-3 113 533 zeigt einen Klapptisch, der mit einem Ende an einer lotrechten Wand schwenkbar gelagert und in der hochgeschwenkten Betriebsstellung, in welcher seine Auflagefläche etwa senkrecht zur lotrechten Wand auskragt, mittels einer Diagonalstrebe, die aus zwei durch ein etwa mittig angeordnetes Gelenk miteinander verbundenen, mit ihren jeweils voneinander abgewandten Enden am Klapptisch bzw. der lotrechten Wand angelenkten, im Querschnitt U-förmigen Stäben besteht, abgestützt ist. Hiermit lassen sich zwar die Nachteile oben geschilderter Art vermeiden. Dennoch erweist sich diese bekannte Anordnung als nicht einfach und bedienungsfreundlich genug. Bei der Anordnung gemäß US-A-3 113 533 ist nämlich das die Stäbe der Diagonalstrebe miteinander verbindende Gelenk unverrückbar angeordnet. Hierbei ist es daher nicht möglich, Montageungenauigkeiten auszugleichen. Diese bekannte Anordnung erfordert daher eine äußerst hohe Montagegenauigkeit und gewährleistet dennoch infolge von bei der werksseitig vorgenommenen Montage fehlender Vorhersehbarkeit der Verhältnisse des Aufstellungsorts keine ausreichende Arbeitsgenauigkeit. Einen ähnlichen Klapptisch wie die US-A-3 113 533 zeigt auch die DE-A-29 48 453.

Die US-A-3 008 500 zeigt eine seitliche Tischverlängerung, die in der Betriebsstellung, in welcher die Auflagefläche der Tischverlängerung mit der Tischauflagefläche fluchtet, mit einer tischseitig vorgesehenen Halteschiene fest verschraubt ist und zusätzlich durch eine Diagonalstrebe abgestützt ist, deren Enden mit dem Tischgestell bzw. der Tischverlängerung ebenfalls verschraubt sind. Die Diagonalstrebe besteht hier aus zwei ineinander einschraubbaren Stäben. Hier ist zwar eine Verlängerung bzw. Verkürzung der Diagonalstrebe zum Ausgleich von Montageungenauigkeiten möglich. Bei dieser bekannten Anordnung kann jedoch die Tischverlängerung und die dieser zugeordnete Diagonalstrebe nicht einfach flügelartig abgeklappt bzw. zusammengeklappt werden. Vielmehr ist es hierbei zur Vermeidung von Sperrigkeit erforderlich, die Tischverlängerung samt Diagonalstrebe durch Lösen der jeweils zugeordneten Verbindungsschrauben abzunehmen. Auch diese bekannte Anordnung erweist sich demnach als nicht bedienungsfreundlich genug.

Hiervon ausgehend ist es daher die Aufgabe der vorliegenden Erfindung, unter Vermeidung der Nachteile der bekannten Anordnungen eine Plattenschneideinrichtung eingangs erwähnter Art zu schaffen, die nicht nur von einer über den Kreissägentisch auskragenden Betriebsstellung in eine platzsparende Ruhestellung verbringbar ist und dabei leicht und einfach gehandhabt werden kann, sondern die auch auf einfache Weise montierbar ist und gleichzeitig eine genaue Justierbarkeit ermöglicht.

Diese Aufgabe wird erfindungsgemäß dadurch gelöst, daß der Schlittenträger kreissägenseitig schwenkbar festgel egt und in der hochgeschwenkten Betriebsstellung in welcher die Plattenauflage mit dem Kreissägentisch fluchtet, mittels mindestens einer aus zwei durch ein Kniegelenk miteinander verbundenen . und mit ihren Enden schwenkbar am Kreissägengestell bzw. am Schlittenträger festgelegte Stäbe bestehenden Diagonalstrebe fixierbar ist, daß die Abmessung des Schl ittenträgers in Schlittenstellrichtung höchstens dem Bodenabstand des Kreissägentisches entspricht, daß die Stäbe der Diago nalstrebe als mit ihren einander zugewandten Enden ineinander eingreifende U-Schienen unterschiedlicher Breite ausgebildet sind, von denen die breite mit einer die Schwenkachse des Gelenks überragenden Verlängerung versehen ist, und daß das) Kniegelenk einen Lagerbock aufweist, der von der den schmäleren Stab der Diagonalstrebe bildenden Schiene umgriffen und zwischen den Schenkeln der den längeren Stab bildenden Schiene angeordnet und verstellbar befestigt ist.

Diese Maßnahmen bewirken nicht nur, daß der Schlittenträger samt Schlitten praktisch flügelartig auf- bzw. abgeschwenkt werden kann, sondern stellen auch sicher, daß die Diagonalstrebe beim Abschwenken des Schlittenträgers mit keinem ihrer Enden von der jeweiligen Abstützstelle abgenommen zu werden braucht, sondern praktisch hieran unlösbar festgelegt sein kann, was in vorteilhafter Weise eine einfache und sichere Handhabung gewährleistet. In der abgeschwenkten Ruhestellung befindet sich der Schlittenträger praktisch in einer lotrechten Hängestellung, wodurch in vorteilhafter Weise jede Art von Sperrigkeit vermieden wird. Dennoch verleiht die hier vorgesehene Diagonalstrebe der Plattenschneideinrichtung in der Betriebsstellung eine hohe Steifigkeit und gewährleistet damit in vorteilhafter Weise eine hohe Schwingungsfreiheit und damit eine hohe Betriebssicherheit und Arbeitsgenauigkeit. Die Ausbildung des die Stäbe der Diagonalstrebe miteinander verbindenden Gelenks als Kniegelenk ergibt eine ganz besonders einfache Handhabung, da hierbei die Betriebsstellung der Diagonalstrebe und damit der gesamten Plattenschneideinrichtung durch den Anschlag des Kniegelenks definiert ist. Dadurch, daß der Lagerbock verstellbar angeordnet ist, kann die Schwenkachse des Kniegelenks verschoben und damit die Länge der Diagonalstrebe auf einfache Weise verändert werden. Hierdurch ist es trotz der flügelartigen Schwenkbarkeit des Schlittenträgers möglich, vielfach nicht zu vermeidende Montageungenauigkeiten auszugleichen und die Plattenauflage der Plattenschneideinrichtung in Abhängigkeit von den Verhältnissen des Aufstellungsorts genau zu horizontieren und zum fluchten mit dem Kreissägentisch zu bringen. Ein weiterer Vorteil der erfindungsgemäßen Maßnahmen ist darin zu sehen, daß hierbei der Lagerbolzen des Kniegelenks einfach durch die Schenkel des dem Lagerbock zugeordneten Stabs gegen Herausfallen gesichert ist und daher als einfacher Stift ausgebildet sein kann. Der mit den erfindungsgemäßen Maßnahmen erzielbare technische Fortschritt ist dem nach insbesondere in der Vermeidung der Nachteile der bekannten Anordnungen unter Beibehaltung ihrer Vorteile zu sehen.

In vorteilhafter Weiterbildung der übergeordneten Maßnahmen kann vorgesehen sein, daß das den Schlittenträger mit dem Kreissägentisch verbindende Gelenk über das die Diagonalstrebe mit dem Kreissägengestell verbindende Gelenk auskragt. Hierdurch ergibt sich in vorteilhafter Weise ein großer Freiraum zur Aufnahme der zusammengeklappten Diagonalstrebe in der Ruhestellung.

Weitere zweckmäßige Fortbildungen und vorteilhafte Ausgestaltungen der übergeordneten Maßnahmen sind in den weiteren Unteransprüchen gekennzeichnet.

Nachstehend wird ein Ausführungsbeispiel der Erfindung anhand der Zeichnung näher erläutert. Hierbei ziegen :

Figur 1 eine Frontansicht einer Tischkreissäge mit angebauter Plattenschneideinrichtung,

Figur 2 eine Ansicht der schlittenträgerseitigen Anlenkung einer Diagonalstrebe teilweise im Schnitt und

Figur 3 eine Draufsicht auf das die Stäbe der Diagonalstrebe miteinander verbindende Gelenk von unten gesehen.

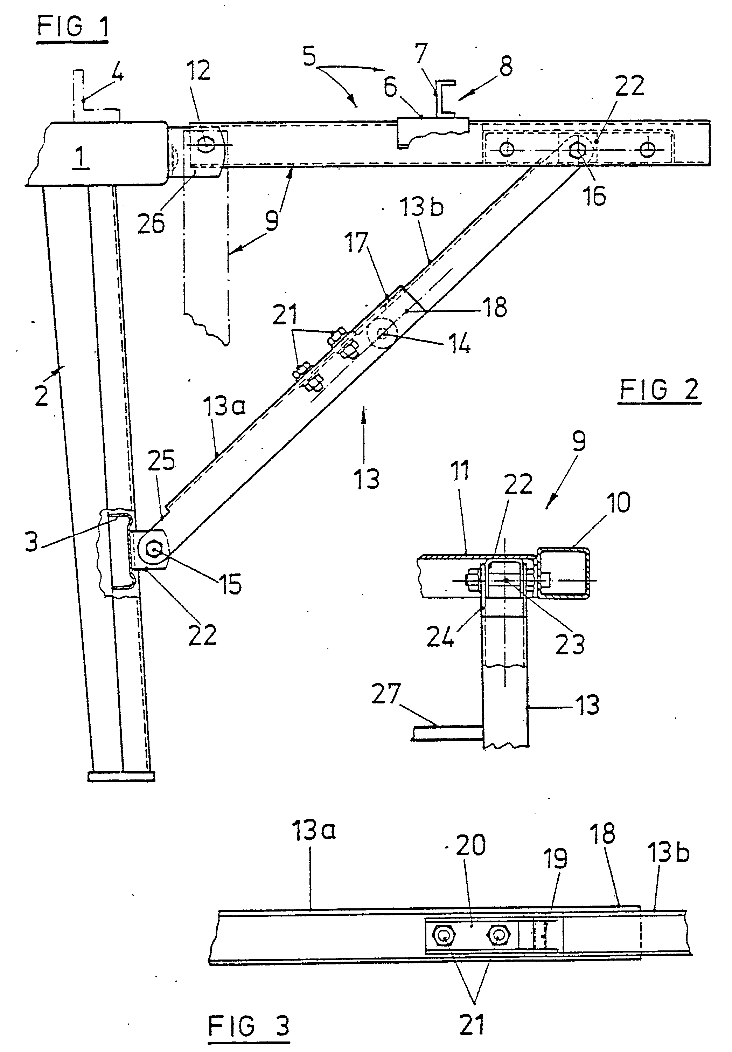

Der prinzipielle Aufbau und die Wirkungsweise einer Tischkreissäge sind an sich bekannt und bedürfen daher im vorliegenden Zusammenhang keiner näheren Erläuterungen mehr. Die in Fig. 1 dargestellte Tischkreissäge besteht aus einem von einem hier nicht mehr sichtbaren Sägenblatt durchsetzten Tisch 1, der mit seinem Rand leicht auskragend auf einem Untergestell 2 abgesetzt ist. Der Tisch 1 kann einfach aus einer Blechtafel mit umgebogenem Rand bestehen. Das Untergestell 2 besteht aus 4 Stützfüßen, die durch umlaufende Streben 3 miteinander verbunden sind. Zur Normalausstattung der Kreissäge gehört ein auf einer Seite des Sägenblatts, normalerweise auf der rechten Seite des Sägenblatts auf dem Tisch 1 festlegbarer Längsanschlag 4 und ein auf der gegenüberliegenden Seite des Sägenblatts auf dem Tisch 1 in Schnittrichtung verschiebbar geführter, hier nicht mehr sichtbarer Queranschlag. Diese Anschläge sind zum Schneiden von Platten, deren Breite die Tischbreite 1 überragt, abnehmbar, wie in Fig. 1 anhand des Längsanschlags 4 durch strichpunktierte Linien angedeutet ist.

Auf der Längsanschlagseite des Tisches 1 ist an diesen eine seitlich auskragende Plattenschneideinrichtung angebaut, die est ermöglicht, Platten mit die Tischbreite 1 überragender Breite sauber und exakt zu bearbeiten. Die als Ganzes mit 5 bezeichnete Plattenschneideinrichtung besitzt eine mit der Auflagefläche des Kreissägentisches 1 fuchtende Plattenauflage 6 und einen Plattenlängsanschlag 7, der zur Einstellung des gewünschten Abstands vom Sägenblatt lotrecht zu seiner Anschlagkante verstellbar ist. Im dargestellten Ausführungsbeispiel sind die Plattenauflage 6 und der Längsanschlag 7 auf einem gemeinsamen Schlitten 8 aufgenommen, der seinerseits auf einem Schlittenträger 9 lotrecht zum Plattenlängsanschlag 7 verschiebbar gelagert ist. Der Schlittenträger 9 besteht, wie am besten aus Fig. 2 erkennbar ist, aus zwei parallelen, vorzugsweise durch Rechteckrohre gebildeten Gleitschienen 10, die durch eine oder mehrere Sprossen 11 miteinander verbunden sind.

Solange die an den Kreissägentisch 1 angebaute Plattenschneideinrichtung 5 nicht benutzt wird, soll diese wenig Platz beanspruchen. Hierzu ist der Schlittenträger 9 anbauseitig um eine kantenparallele Achse 12 schwenkbar gelagert. Hierdurch kann der Schlittenträger 9 der Plattenschneideinrichtung 5 samt Schlitten 8 von einer in Fig. 1 mit durchgezogenen Linien gezeichneten Betriebsstellung in eine mit strichpunktierten Linien angedeutete Ruhestellung abgeschwenkt werden und umgekehrt. In der Ruhestellung hängt der Schlittenträger 9 einfach lotrecht vom zugeordneten Anbaurand des Kreissägentisches 1 herunter und verursacht damit praktisch keinen nennenswerten zusätzlichen Platzbedarf. Die Breite des Schlittenträgers 9, d. h. seine Abmessung in Stellrichtung des in Fig. 1 von links nach rechts und umgekehrt verschiebbaren Schlittens 8, ist etwas kleiner als der Bodenabstand des Kreissägentisches 1, im vorliegenden Fall etwas kleiner als die Höhe der Stützfüße des Untergestells 2, so daß der durch die auf der Höhe des Kreissägentisches 1 sich befindende Schwenkachse 12 abschwenkbare Schlittenträger 9 beim Abschwenken mit seinem äußeren Ende nicht auf den Aufstellungsuntergrund aufläuft. In der hochgeschwenkten Stellung ist der Schlittenträger 9 zur Bewerkstelligung hoher Arbeitssicherheit fixierbar. Hierzu kann eine am Schlittenträger 9 und am Untergestell 2 abstützbare Diagonalstrebe 13 Verwendung finden, die beidseitig oder jedenfalls einseitig abnehmbar ist.

Im dargestellten Ausführungsbeispiel ist die Diagonalstrebe 13 als Knickarm ausgebildet, der aus zwei etwa gleich langen Stäben 13a bzw. 13b besteht, die im Bereich der einander zugewandten Enden durch ein Gelenk 14 miteinander verbunden sind und deren hiervon abgewandte Enden durch Gelenke 15 bzw. 16 an das Untergestell 2 der Kreissäge, hier im Bereich der umlaufenden Leiste 3, bzw. an den Schlittenträger 9 angeschlossen sind. Beim Abschwenken des Schlittenträgers 9 in die in Fig. 1 mit strichpunktierten Linien angedeutete Ruhestellung schwenkt das die Stäbe 13a und 13b verbindende, mittige Gelenk 14 nach oben aus, wobei sich die hiermit verbundenen Stäbe 13a und 13b aneinander annähern. Im dargestellten Ausführungsbeispiel sind die Stäbe 13a und 13b, wie am besten aus Fig. 3 erkennbar ist, als ineinander eingreifende U-Schienen ausgebildet, so daß im abgeknickten Zustand die schmälere Schiene, hier der Stab 13b, in der die größere lichte Weite aufweisenden Schiene, hier dem Stab 13a, Platz finden kann, was den Platzbedarf weiter reduziert. Da der Tisch 1 über den tischseitigen Rand des Untergestells 2 leicht auskragt, ergibt sich ohnehin unterhalb des auskragenden Tischrands genügend Freiraum für den Knickarm.

Das die Stäbe 13a bzw. 13b der Diagonalstrebe 13 miteinander verbindende Gelenk 14 ist als Kniegelenk ausgebildet, das heißt Schwenkbereich ist durch einen Anschlag 17 begrenzt. Im dargestellten Ausführungsbeispiel entspricht die Anschlagstellung der Streckstellung des die Diagonalstrebe 13 bildenden Knickarms, in welcher sämtliche drei Gelenke 14, 15, 16 auf einer Linie liegen. Es wäre aber auch denkbar, daß der die Diagonalstrebe 13 bildende Knickarm in der Anschlagstellung leicht über die Streckstellung hinaus nach unten durchgeknickt ist, um einem selbsttätigen Ausknicken entgegenzuwirken. Normalerweise reicht aber bereits die durch die Lagerreibung gegebene Selbsthemmung aus, um in der dargestellten Streckstellung ein selbsttätiges Ausknicken zu verhindern. Der Anschlag 17 wird im dargestellten Ausführungsbeispiel einfach dadurch gebildet, daß einer der Stäbe 13a bzw. 13b, im dargestellten Ausführungsbeispiel der die größere Breite aufweisende Stab 13a, eine über das Gelenk 14 hinausgehende, in Eingriff mit dem anderen Stab, hier dem Stab 13b kommende Verlängerung 18 besitzt. Die U-förmigen Stäbe 13a und 13b greifen dabei so ineinander ein, daß ihre Stege in der Streckstellung aneinander anliegen und beim Ausknicken voneinander abheben. Im dargestellten Ausführungsbeispiel, in welchem der untere Stab 13a den oberen Stab 13b umfaßt, sind die Stäbe 13a bzw. 13b hierzu mit nach oben weisendem Steg angeordnet, so daß sich in der Streckstellung die erwünschte Sperre ergibt und ein Ausschwenken des Gelenks 14 nach oben möglich ist. Die Länge der Verlängerung 18 des Stabs 13a ist hier zweckmäßig so zu bemessen, daß der Stab 13a beim Abschwenken des Schlittenträgers 9 nicht in Kollision mit diesem bzw. dem Kreissägentisch 1 kommt.

Zum Ausgleich von Montageungenauigkeiten ist die Diagonalstrebe 13 in ihrer Länge veränderbar. Dies wird im dargestellten Ausführungsbeispiel einfach dadurch bewerkstelligt, daß das Gelenk 14 verschoben und damit die über das Gelenk 14 hinausgehende Verlängerung 18 des Stabs 13a mehr oder weniger verkürzt bzw. verlängert wird. Im dargestellten Ausführungsbeispiel ist hierzu, wie der Fig. 3 weiter am besten entnehmbar ist, ein einen Gelenkbolzen 19 tragender Lagerbock 20 vorgesehen, der auf dem die Verlängerung 18 aufweisenden Stab 13a in der gewünschten Stellung festlegbar ist. Im dargestellten Ausführungsbeispiel sind hierzu Spannschrauben 21 vorgesehen, denen lagerbockseitig bzw. stabseitig Langlöcher zugeordnet sein können. Der Lagerbock 20 ist im dargestellten Ausführungsbeispiel als U-Abschnitt ausgebildet, dessen äußere Weite dem lichten Abstand der Schenkel des in den Stab 13a eingreifenden Stabs 13b entspricht und der mit entsprechendem seitlichem Spiel in dem die größere lichte Weite aufweisenden Stab 13a angeordnet ist. Der Lagerbolzen 19 ist dabei einfach durch die Schenkel des Stabs 13a gegen Herausfallen gesichert und kann daher in vorteilhafter Weise als einfacher Stift ausgebildet sein.

Die Schwenklager 15 bzw. 16 bestehen ebenfalls, wie am besten aus Fig. 2 erkennbar ist, aus U-förmigen Lagerböcken 22, die einen zugeordneten Lagerbolzen 23 aufnehmen und von den hierin eingreifenden Schenkeln 24 der hieran gelargerten Stäbe 13a bzw. 13b umfaßt sind. Die lagerbockseitigen Enden der Stäbe 13a bzw. 13b sind, wie Fig. 1 weiter erkennen läßt, abgerundet und steigseitig ausgenommen, wie in Fig. 1 bei 25 angedeutet ist. Dies ermöglicht die Durchführung großer Schwenkwinkel, ohne daß der Steg an den zugeordneten Lagerbock anläuft. Dasselbe gilt auch für die einander zugewandten Enden des in den Stab 13a eingeschraubten Lagerbocks 20 und des Stabs 13b. Die um die Achse 12 schwenkbaren Gleitschienen 10 des Schlittenträgers 9 sind ebenfalls in U-förmigen Lagerböcken 26 aufgenommen, die tischseitig festgelegt sind. Die lichte Weite der Lagerböcke 26 ist so bemessen, daß die als Vierkantrohre ausgebildeten Gleitschienen 10 hiervon ohne Spannung umfaßt werden. Die U-förmigen Lagerböcke 22 bzw. 26 können wie der Lagerbock 20 einfach durch stegseitig angreifende Schrauben auf der jeweils zugeordneten Unterlage gehalten werden oder mit dieser einfach verschweißt sein.

Vielfach genügt eine Diagonalstrebe 13, die schlittenträgerseitig etwa in der Mitte der Sprosse 11 angreift. Im dargestellten Ausführungsbeispiel sollen zwei parallele Diagonalstreben 13 vorgesehen sein, die jeweils, wie Fig. 2 weiter erkennen läßt, in dem der jeweils zugeordneten Gleitschiene 10 eng benachbarten Bereich der Sprosse 11 an dieser angreifen, was eine hohe Steifigkeit gewährleistet. Diese beiden Diagonalstreben können dabei zur Vereinfachung der Handhabung vorteilhaft durch eine oder mehrere Traversen 27 miteinander verbunden sein. Die Gelenkbolzen der Lagerböcke 22 bzw. 26 können einfach als Schrauben ausgebildet sein, deren Mutter gesichert ist. Hierdurch ist sichergestellt; daß auf einfache Weise durch mehr oder weniger starkes Anziehen dieser Schrauben eine völlige Spielfreiheit im Bereich der Gelenke erzielbar ist.

Vorstehend ist zwar ein besonders bevorzugtes Ausführungsbeispiel der Erfindung näher erläutert, ohne daß jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung im Rahmen der Patentansprüche an die Verhältnisse des Einzelfalls anzupassen.

## Patentansprüche

1. Plattenschneideinrichtung für eine Tischkreissäge, insbesondere für Heimwerker- und-/oder Baueinsatz, die eine Plattenauflage (6) und einen Plattenlängsanschlag (7) aufweist und mit zum Kreissägentisch (1) fluchtender Plattenauflage auf der Längsanschlagseite der Kreissäge an diese anbaubar ist und die mit einem zumindest den Plattenlängsanschlag (7) enthaltenden Schlitten (8) versehen ist, der lotrecht zum Plattenl ängsanschlag verstellbar auf einem im Bereich der Randkante des Kreissägentisches befestigten Schlittenträger (9) aufgenommen ist, dadurch gekennzeichnet, daß der Schlittenträger (9) kreissägenseitig schwenkbar festgelegt und in der hochgeschwenkten Betriebsstellung, in welcher die Plattenauflage (6) mit dem Kreissägentisch (1) fluchtet, mittels mindestens einer aus zwei durch ein Kniegelenk (14) miteinander verbundenen und mit ihren Enden schwenkbar am Kreissägengestell bzw. am Schlittenträger (9) festgelegte Stäbe (13a bzw. 13b) bestehenden Diagonalstrebe (13) fixierbar ist, daß die Abmessung des Schlittenträgers (9) in Schlittenstellrichtung höchstens dem Bodenabstand des Kreissägentisches (1) entspricht, daß die Stäbe (13a, 13b) der Diagonalstrebe (13) als mit ihren einander zugewandten Enden ineinander eingreifende U-Schienen unterschiedlicher Breite ausgebildet sind, von denen die breitere mit einer die Schwenkachse des Kniegelenks (14) überragenden Verlängerung (18) versehen ist, und daß das Kniegelenk (14) einen Lagerbock (20) aufweist, der von der den schmäleren Stab (13b) der Diagonalstrebe (13) bildenden Schiene umgriffen und zwischen den Schenkeln der den längeren Stab (13a) bildenden Schiene angeordnet und verstellbar befestigt ist.

2. Plattenschneideinrichtung nach Anspruch 1, dadurch gekennzeichnet, daß die Gelenke von Schlittenträger (9) und Diagonalstrebe (13) mit U-förmigen Lagerböcken (20 bzw. 22 bzw. 26) versehen sind, die mit ihrem Steg am jeweils zugeordneten Träger festlegbar sind und deren Schenkel einen Gelenkbolzen (19 bzw. 23) tragen.

3. Plattenschneideinrichtung nach einem der vorhergehenden Ansprüche, dadurch gekennzeichnet, daß die lagerbockseitigen Enden oder Stäbe (13a bzw. 13b) der Diagonalstrebe (13) abgerundete Schenkel und eine stegseitige Ausnehmung (25) aufweisen, und daß die Schenkel (24) den jeweils zugeordneten Lagerbock (20 bzw. 22) umfassen.

4. Plattenschneideinrichtung nach einem der vorhergehenden Ansprüche, dadurch gekennzeichnet, daß das den Schlittenträger (9) mit dem kreissägentisch (1) verbindende Gelenk (12) über das die Diagonalstrebe (13) mit dem Kreissägengestell verbindende Gelenk (15) auskragt.

5. Plattenschneideinrichtung nach einem der vorhergehenden Ansprüche, dadurch gekennzeichnet, daß der Schlittenträger (9) zwei parallele, durch jeweils ein Gelenk (12) kreissägentischseitig festlegbare Gleitschienen (10) aufweist, dir durch mindestens eine Sprosse (11) miteinander verbunden sind und denen jeweils eine zugeordnete, sprossenseitig festgelegte Diagonalstrebe (13) benachbart ist.

6. Plattenschneideinrichtung nach einem der vorhergehenden Ansprüche mit mindestens zwei Diagonalstreben, dadurch gekennzeichnet, daß die Diagonalstreben (13) mittels mindestens einer quer hierzu angeordneten Traverse (27) miteinander verbunden sind.

## Claims

1. In a board cutting unit for a circular saw bench, in particular for use by do-it-yourself handymen and/or in the building trade, having a board support (6) and a length stop (7) for the board, being able to be fixed to the circular saw on the latter's side of the length stop with the board support in alignment with the bench (1) of the circular saw, and having a carriage (8) which contains at least the length stop (7) for the board, can be adjusted normal to the length stop of the board, and is placed on a carriage support (9) fixed to the bench of the circular saw in the area of the latter's edge, characterized in that the carriage support (9) is swingingly fixed on the side of the circular saw, and in its swung up working position, in which the board support (6) is in alignment with the bench (1) of the circular saw, can be fixed by means of at least one diagonal rod (13) consisting of two rods (13a or 13b respectively) which are connected with each other by a knee joint (14) and the ends of which are swingingly fixed to the frame of the circular saw or to the carriage support (9) respectively ; that the dimension of the carriage support (9) in the direction of movement of the carriage is at the most equal to the distance between floor and the bench (1) of the circular saw ; that the rods (13a, 13b) of the diagonal rod (13) are in the form of U-shaped rails of different width which engage each other with their facing ends and of which the wider rail has an extension (18) surpassing the swinging axis of the knee joint ; and that the knee joint has a rest (20) which is gripped by the rail forming the narrower rod (13b) of the diagonal rod (13), placed between the sides of the rail forming the longer rod (13a) and fixed so that it can be adjusted.

2. A board cutting unit as claimed in claim 1, characterized in that the joints of the carriage support (9) and the diagonal rod (13) have U-shaped rests (20 or 22 or 26 respectively) which can be fixed to the corresponding support each with their crosspiece and the sides of which have a joint bolt (19 or 23 respectively).

3. A board cutting unit as claimed in anyone of the preceding claims, characterized in that the ends or rods (13a or 13b respectively) of the diagonal rod (13) on the side of the rest have rounded sides and a recess (25) on the side of the crosspiece, and that the sides (24) enclose the corresponding rest (20 or 22 respectively).

4. A board cutting unit as claimed in anyone of the preceding claims, characterized in that the joint (12) which connects the carriage support (9) with the bench (1) of the circular saw projects over the joint (15) which connects the diagonal rod (13) with the frame of the circular saw.

5. A board cutting unit as claimed in anyone of the preceding claims, characterized in that the carriage support (9) has two parallel slide bars (1) which can be fixed by a joint (12) each on the side of the bench of the circular saw, are connected with each other by at least one crossbar (11), and which are next to a corresponding diagonal rod (13) each fixed on the side of the crossbar.

6. A board cutting unit as claimed in anyone of the preceding claims, with at least two diagonal rods, characterized in that the diagonal rods (13) are connected with each other by means of at least one cross-rail (27) placed at right angles to them.

## Revendications

1. Dispositif pour scier les panneaux, adaptable sur une scie circulaire à table, destiné en particulier au bricoleur et/ou au secteur de la construction, présentant une surface de pose (6) et une butée de longueur (7) pour panneaux pouvant être monté du côté de la butée de longueur de la scie circulaire de façon à affleurer avec la table de la scie circulaire (8) et est doté d'un chariot comprenant au moins la butée de longueur pour panneaux (7) et réglable perpendiculairement par rapport à la butée de longueur pour panneaux et placé dans un porte-chariot (9) fixé à proximité de l'arête du bord de la table de la scie circulaire, caractérisé en ce que le porte-chariot (9) est fixé côté scie circulaire pour pouvoir pivoter et être maintenu en position de travail — position dans laquelle la surface de pose pour panneaux (6) affleure avec la table de la scie circulaire (1) — au moyen d'une écharpe diagonale (13) composée de deux barres (13a et 13b) reliées entre elles par une genouillère (14) et fixées, de façon à pouvoir pivoter, respectivement au bâti de la scie circulaire et au porte-chariot (9). Le dispositif est conçu de façon à ce que la largeur du porte-chariot (9) dans le sens du réglage du chariot corresponde au maximum à la distance entre la table de la scie circulaire (1) et le sol et que les barres (13a et 13b) de l'écharpe diagonale (13) se présentent comme des glissières en U de longueur différente aux extrémités contiguës coulissant l'une dans l'autre, la plus large des deux barres étant dotée d'une rallonge (18) allant au-delà de l'axe de pivotement de la genouillère (14). Le dispositif est également conçu de façon à ce que la genouillère (14) présente un palier (20) enveloppé par la glissière constituée par la barre la plus étroite (13b) de l'écharpe diagonale (13), logé et fixé de façon à pouvoir être réglé entre les ailes de la glissière constituant la barre la plus longue (13a).

2. Dispositif pour scier les panneaux selon la revendication 1, caractérisé en ce que les articulations du porte-chariot (9) et de l'écharpe diagonale (13) sont pourvues de paliers en forme de U (20, 22, 26) dont l'âme peut être fixée à son support respectif et dont les ailes portent un boulon d'articulation (19 et 23).

3. Dispositif pour scier les panneaux selon une des revendications précédentes, caractérisé en ce que les extrémités côté palier des barres (13a et 13b) de l'écharpe diagonale (13) présentent des ailes arrondies et un évidement côté âme (25), les ailes (24) entourant les paliers respectifs (20 et 22).

4. Dispositif pour scier les panneaux selon une des revendications précédentes, caractérisé en ce que l'articulation (12) reliant le porte-chariot (9) à la table de la scie circulaire (1) fait saillie par rapport à l'articulation (15) reliant l'écharpe diagonale (13) au bâti de la scie circulaire.

5. Dispositif pour scier les panneaux selon une des revendications précédentes, caractérisé en ce que le porte-chariot (9) présente deux glissières (10) parallèles fixées chacune côté table de la scie circulaire par une articulation (12). Ces glissières (10) sont reliées entre elles par au moins une entretoise (11) et ont chaque fois, à proximité, une écharpe diagonale (13) fixée côté entretoise.

6. Dispositif pour scier les panneaux selon une des revendications précédentes avec au moins deux écharpes diagonales, caractérisé en ce que les écharpes diagonales (13) sont reliées entre elles par au moins une traverse oblique (27).

FIG 1

FIG 2

FIG 3